# EUROPEAN PATENT SPECIFICATION

(11) **EP 3 547 275 B1**
(45) Date of publication and mention of the grant of the patent: **30.11.2022**
(21) Application number: 19165829.3
(22) Date of filing: 28.03.2019
(51) Int. Cl.: G08B 13/14, B65D 55/02

(54) **CONTAINER SECURITY SYSTEM**
CONTAINERSICHERHEITSSYSTEM
SYSTÈME DE SÉCURITÉ DE CONTENEUR

(30) Priority: 28.03.2018 US 201815938552
(43) Date of publication of application: 02.10.2019
(60) Divisional application: 22174549.0
(73) Proprietor: In-Tech Enterprise Ltd., Kowloon (HK)
(72) Inventor: Tsang, Jacky Sai Ping, Shatin, N.T. (HK); Chim, Cheuk Kuen, Shatin, N.T. (HK); Pope, Gordon Christopher, The Peak (HK); Cheung, Wing Hung, Kowloon (HK)
(74) Representative: Nordmeyer, Philipp Werner

(56) References cited:
- EP-A1- 2 083 412
- EP-A1- 3 284 692
- WO-A1-2008/088341
- US-A1- 2014 091 931

## Description

### FIELD OF THE DISCLOSURE

This disclosure relates generally to containers, and, more particularly, to closure security systems for containers.

### BACKGROUND

Containers may be used for storage, shipping, and packaging of a variety of products. For example, intermediate bulk containers (IBC), drums, barrels, bottles, and/or other containers are designed for the transport and storage of bulk liquid and granulated substances such as chemicals, food ingredients, solvents, pharmaceuticals, hazardous materials, and/or a variety of other goods and products known in the art. Containers typically have one or more openings that allow access to the containers through which the container may be filled with the product, and/or through which the product may be dispensed from the container. During shipment and storage, these openings may be obstructed with a variety of closures such as, for example, caps, plugs, tops, valves, lids, and other closures. These closures provide many benefits for the container and the product being shipped and/or stored within the container such as, for example, preventing the product within the container from escaping, preventing materials from outside of the container from entering the container and contaminating the product, preventing spoilage, as well as other uses that would be apparent to one of skill in the art.

Conventional closures attempt to provide container security by including seals that, when broken, indicate whether the container has been opened, prior to, or subsequent to filling the container with the product. Due to the nature of some products being shipped in containers, seals may be important for tracking and determining whether the product within the container has been tampered with (e.g., lost, stolen, and/or contaminated). For example, high value liquids used in agrochemical industries may be stolen and/or replaced with counterfeit products, and products used in food industry may require integrity and/or traceability. Such conventional container security systems provide the ability to detect whether the container has been tampered with by visual inspection of the seal. However, these conventional container security systems are subject to circumvention. For example, the seal may be broken, the closure removed, the product in the container replaced, diluted, or stolen (e.g., during shipment), and the closure and seal then duplicated and replaced on the container such that the tampering with the product goes undetected.

EP 2 083 412 A1 shows a monitoring device which has a transmitting unit, and an electronic monitoring unit electrically and mechanically connected with a sealing unit. The monitoring unit produces alarm signals when strip conductors of the sealing unit are broken.
US 2014/0091931 A1 shows a container monitoring device with a cable lock and remote sensor pods.
WO 2008/088341 A1 shows a system in a method for determining structure intrusions.
EP 3 284 692 A1 shows a plug, a system and a method for detecting tampering of a container.

Accordingly, it would be desirable to provide an improved closure security system for containers.

### SUMMARY

This object is solved by the subject-matter of the independent claims. Further developments and refinements are defined by the respective dependent claims.

According to one embodiment of the present invention, a closure system includes: a closure chassis that is configured, when coupled to a container chassis, to prevent movement of a material between a container volume defined by the container chassis and an exterior of the container chassis via a first aperture defined by the container chassis; said closure chassis comprising an RFID tag that stores encrypted information including an encrypted identifier; a first sensor subsystem that is coupled to the closure chassis and that is configured to generate a first sensor signal when the closure chassis experiences a tamper event; a first type communication interface housed in the closure chassis; a first processing system that is housed in the closure chassis and that is coupled to the first type communication interface and the first sensor subsystem; and a first memory system that is housed in the closure chassis and that includes instruction that, when executed by the first processing system, causes the first processing system to provide a first security engine that is configured to: receive a first sensor signal indicating that the closure chassis has experienced the tamper event; and provide, in response to receiving the first sensor signal using the first type communication interface, a first notification to a corresponding first type communication interface that the closure chassis has experienced the tamper event; whereby said closure chassis (236) and/or the container chassis (202) includes a security sensor that includes an RFID reader, the RFID tag reader being configured to read the RFID tag and to broadcast the encrypted information included in the RFID tag to a standard communication interface housed within the closure chassis (236) and/or the container chassis (202).

### BRIEF DESCRIPTION OF THE DRAWINGS

Fig. 1 is a schematic view illustrating an embodiment of a networked container system.
Fig. 2A is a perspective view illustrating an embodiment of a container system that may be provided in the networked container system of Fig. 1.
Fig. 2B is a perspective view illustrating an embodiment of a container system that may be provided in the networked container system of Fig. 1.
Fig. 2C is a schematic view illustrating an embodiment of the container system of Fig. 2A and Fig. 2B.
Fig. 3 is a flow chart illustrating an embodiment of a method for providing container security.
Fig. 4A is a perspective view illustrating an embodiment of the container system of Figs. 2A and 2C during the method of Fig. 3.
Fig. 4B is a perspective view illustrating an embodiment of the container system of Figs. 2A and 2C during the method of Fig. 3.
Fig. 5 is a schematic view illustrating an embodiment of a computer system.

Embodiments of the present disclosure may be understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### DETAILED DESCRIPTION

Embodiments of the present disclosure include closure security systems for container systems, as well as methods for providing container security, that may be used to track containers while maintaining the integrity of the product within the container. As discussed above, existing seals and closures for containers do not prevent tampering with the containers and products provided within those containers, as it has been found that the conventional closures and seals are easily reproduced and replaced on tampered-with containers such that it is difficult for legitimate parties (e.g., a container manufacturer, a container filler, a container transporter, a container end user, and other parties) associated with the container to detect tampering with the closure and/or seal. The present disclosure proposes a novel closure security system that provides for the detection of whether a closure subsystem has experienced a tamper event such as, for example, the closure subsystem being removed from the container when closure subsystem is damaged, punctured, drilled, opened with or without authorization or replaced with or without authorization such that the contents of the container may be used, lost, diluted, stolen, leaked, replaced, contaminated, emptied or otherwise devalued. The container system can provide time and location data associated with any such tampering actions to a user device of a party of interest and/or a network service platform in a network environment accessible from any user device. Additional sensors may also be included in the closure subsystem and/or container system to provide data as to the status of the product being transported or stored in the container, as well as assist in inventory management. Examples of sensors may include depth measurement sensors, temperature sensors, humidity sensors, chemical agent sensors (to ensure authenticity of chemical products), orientation sensors, pressure sensors, movement sensors (e.g., an accelerometer), shock sensors, pH sensors, and/or any other sensors that may be used to detect tampering events and gather information about the container system, the closure subsystem, and/or the product within the container.

Container systems are often sealed on production, following cleaning, as well as after filling them with a product, which is intended to allow any owner of and/or party associated with the container system to ensure there is no container tampering or contamination of the product within by checking that the closure subsystem has not been tampered with (i.e., it is the same closure subsystem as the one that was provided on the container system after production, cleaning, and/or filling.) In various embodiments, the closure subsystem of the present disclosure may include a memory device that may be programmed with data such as a closure identifier, which may be encrypted. This closure identifier may be associated with a container identifier stored in a database, and may be read at any time during the container system's life cycle to confirm it is the expected closure identifier, and therefore the closure subsystem that was used to secure the container that is associated with the container identifier when the container was most recently sealed.

The closure subsystem may include a communication interface to communicate the container identifier to a user device or to a container module included in the container system. The container system may also include a container module that is separate from the closure subsystem and that is configured to communicate the status of the closure subsystem to a user device, a network service platform, and/or a user. In some embodiments, the container module may be separate from the closure subsystem for several reasons. For example, the location of the container may be tracked with the container module. Furthermore, the closure subsystem may be designed to be destroyed during removal, and therefore may lose its ability to communicate. Further still, the closure subsystem may have a small form factor, and this constraint may restrict the battery capacity, antenna performance, and other attributes, which necessitates the separate container module with a separate secondary communication interface where such constraints are no longer present. Further still, the cost of the components (e.g., tamper detection mechanisms) in the closure subsystem may be less expensive than the components (e.g., communication components) in the container module, making the separation of these modules relatively more cost-effective.

As such, in various embodiments, the closure subsystem may include a Near Field Communication (NFC) device, Bluetooth (BT) device, and/or a variety of other short range, low energy, peer-to-peer communication interfaces that would be apparent to one of skill in the art in possession of the present disclosure. For example, the NFC device may contain encrypted information regarding the container system such as the identity of the container system/closure subsystem, a time and a date of filling the container system with product contents, serial numbers for the product, and/or any other information about the product, the container system, the container module, the closure subsystem, and/or any other characteristic of the system components/contents. This information may be available to the BT device and may be communicated to the container module via the BT device and/or any other device with a BT receiver. In some examples, the container module may be used to provide a notification that a closure subsystem has been tampered with by providing that notification over a wide area network using a longer-range communication interface than any of those available in the communication interface of the closure subsystem in response to, for example, the closure subsystem detecting an event, a request for verification on the container system, the closure subsystem, and/or the product provided in the container, and/or in a variety of other scenarios that would be apparent to one of skill in the art in possession of the present disclosure.

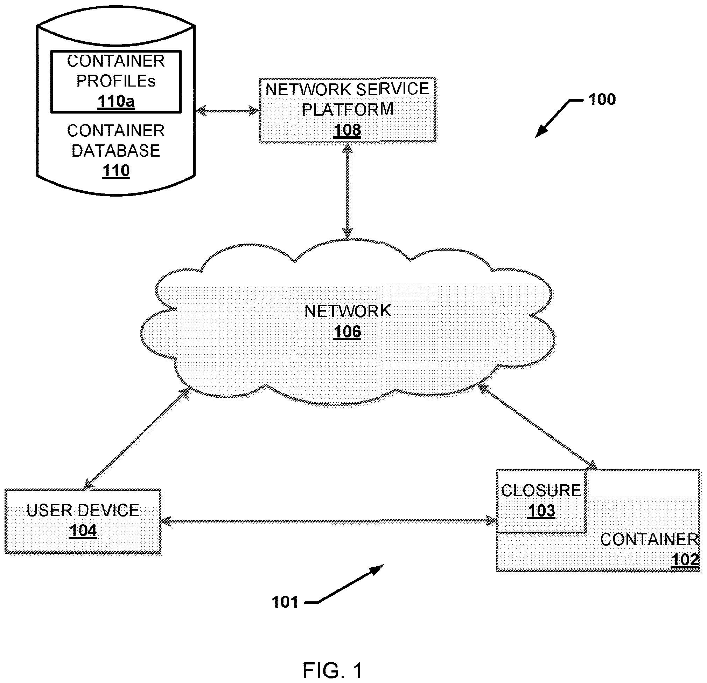

Referring now to Fig. 1, an embodiment of a networked container system 100 is illustrated. In the illustrated embodiment, the networked container system 100 includes a container system 102 provided in a physical environment 101. In various embodiments, the container system 102 may include a bottle, a drum, a barrel, a bulk container, a jar, and/or any other containers that may benefit from the teachings of the present disclosure and that would be apparent to one of skill in the art in possession of the present disclosure. The physical environment 101 may be any indoor or outdoor space that may be contiguous or non-contiguous. For example, the physical environment 101 may include a yard, a warehouse, a business, a factory, a transit route, a transport vehicle, and/or any other space known in the art. The physical environment 101 may be defined by geofencing techniques that may include specific geographic coordinates such as latitude, longitude, and/or altitude, and/or may operate within a range defined by a wireless communication signal.

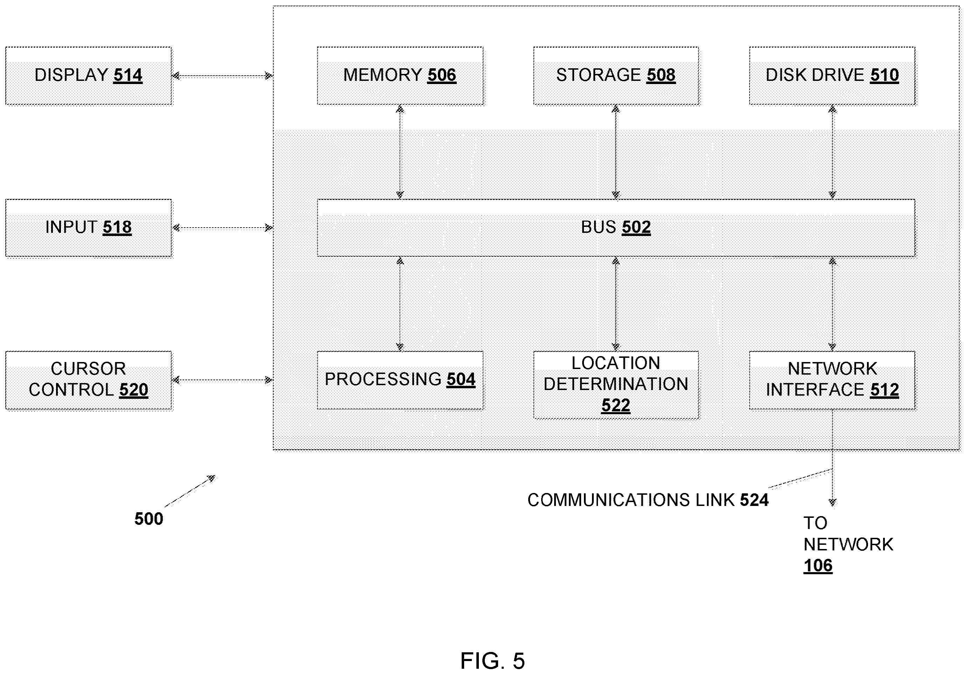

In various embodiments, the container system 102 may utilize a computer system such as the computer system 500 discussed below with reference to Fig. 5, and/or components of the computer system 500. The container system 102 may include communication units having one or more transceivers that enables communication with a closure subsystem 103, discussed in further detail below, a user device 104, a network service platform 108, other container systems, and/or any other device that would be apparent to one of skill in the art in possession of the present disclosure. Accordingly and as disclosed in further detail below, the container system 102 may perform direct or indirect communication with the closure subsystem 103, the user device 104, and/or other container systems. As used herein, the phrase "in communication" (and including variances thereof) is intended to encompass direct communication, as well as indirect communication through one or more intermediary components, and does not require direct physical (e.g., wired and/or wireless) communication and/or constant communication, but rather may include selective communication at periodic or aperiodic intervals, as well as one-time events.

For example, the container system 102 in the networked container system 100 of Fig. 1 may include first (e.g., long-range) transceiver(s) to permit the container system 102 to communicate with a network 106 (e.g., a wide area network (WAN)). The network 106 may be implemented by a mobile cellular network such as, for example, a long term evolution (LTE) network or other third generation (3G), fourth generation (4G), or fifth-generation (5G) wireless networks. However, in some examples, the network 106 may be additionally or alternatively be implemented by one or more other communication networks such as, but not limited to, a satellite communication network, a microwave radio network, and/or any other communication networks that would be apparent to one of skill in the art in possession of the present disclosure.

The container system 102 and/or the closure subsystem 103 may also include second (e.g., short-range) transceiver(s) to allow the container system 102 and/or the closure subsystem 103 to communicate with each other, the user device 104, and/or other container systems. In the example illustrated in Fig. 1, such second transceivers are implemented by a type of transceiver supporting relatively short-range (i.e., operating at distances that are shorter than those utilized by the long range transceivers) wireless networking communications. For example, such second transceivers may be implemented by Wi-Fi transceivers (e.g., via a Wi-Fi Direct protocol), Bluetooth^{®} transceivers, Bluetooth^{®} low energy (BLE) transceivers, infrared (IR) transceivers, Near Field Communication (NFC) transceivers, Zigbee^{®} transceivers, radio-frequency identification (RFID) tags, ANT transceivers, Z-Wave^{®} transceivers, and/or any other transceivers that are configured to allow the container system 102 and/or the closure subsystem 103 to intercommunicate via an ad-hoc and/or other wireless network.

In various embodiments below, the user device 104 is described as a mobile computing device such as laptop/notebook computing devices, tablet computing devices, mobile phones, and wearable computing devices. However, in other embodiments, the user device 104 may be provided by desktop computing devices, server computing devices, and/or a variety of other computing devices that would be apparent to one of skill in the art in possession of the present disclosure. The user device 104 may include a communication unit having one or more transceivers to enable the user device 104 to communicate with the network service platform 108 and the container system 102 via the network 106, and/or to communicate with the container system 102 and/or the closure subsystem 103 via a short-range wireless network. Accordingly, and as disclosed in further detail below, the user device 104 may perform direct and/or indirect communications with the container system 102 and/or the closure subsystem 103.

The networked container system 100 also includes and/or may be in communication with a network service platform 108. For example, the network service platform 108 may include one or more server devices, storage systems, cloud computing systems, and/or other computing devices (e.g., desktop computing device(s), laptop/notebook computing device(s), tablet computing device(s), mobile phone(s), etc.). As discussed below, the network service platform 108 may be coupled to a container database 110 that is configured to provide repositories such as a container repository of container profiles 110a for container systems 102 within the physical environment 101. For example, the container database 110 may store a plurality of container profiles 110a that each include a container identifier and information associated with the container (e.g., events, product information, sensor information, and/or any other information that would be apparent to one of skill in the art in possession of the present disclosure). Furthermore, each container profile 110a may include an associated closure identifier that is associated with the container identifier in order to pair, link, or otherwise associate closure subsystems with containers in the container systems.

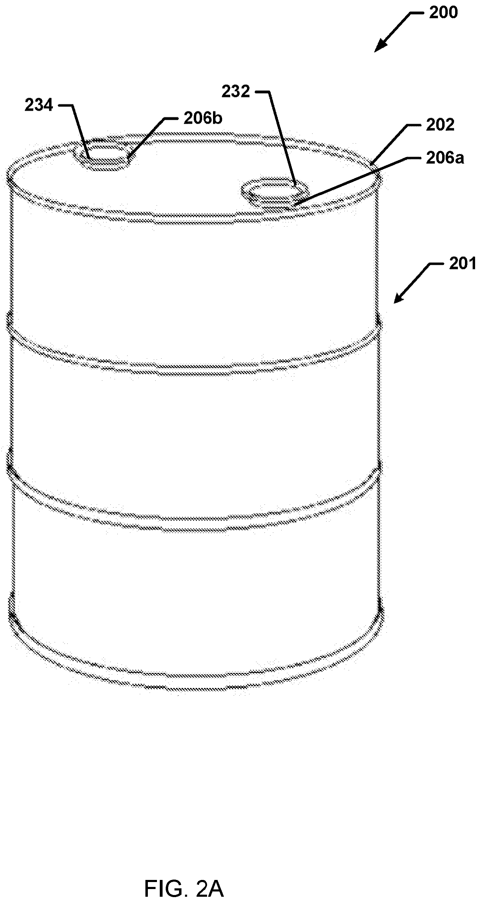

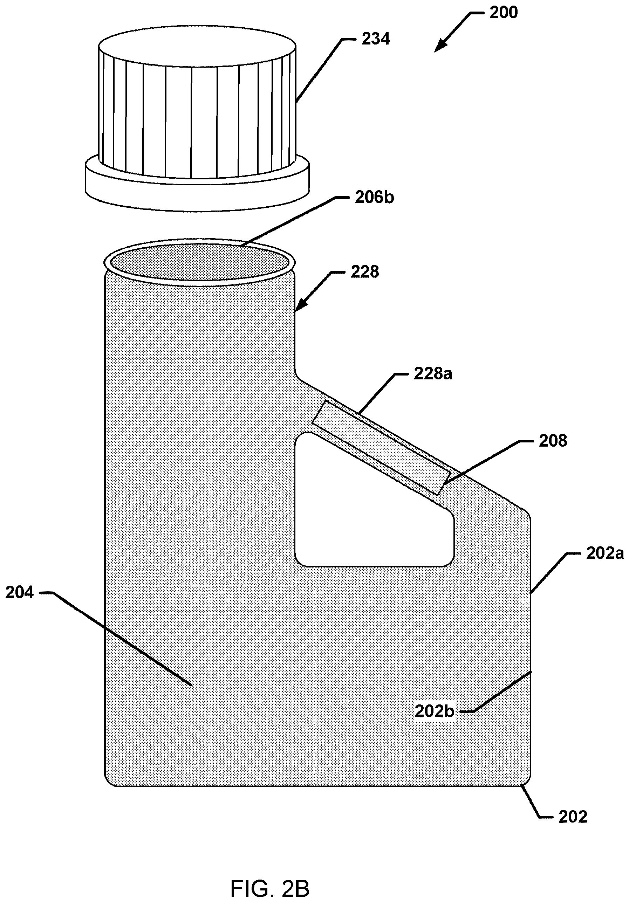

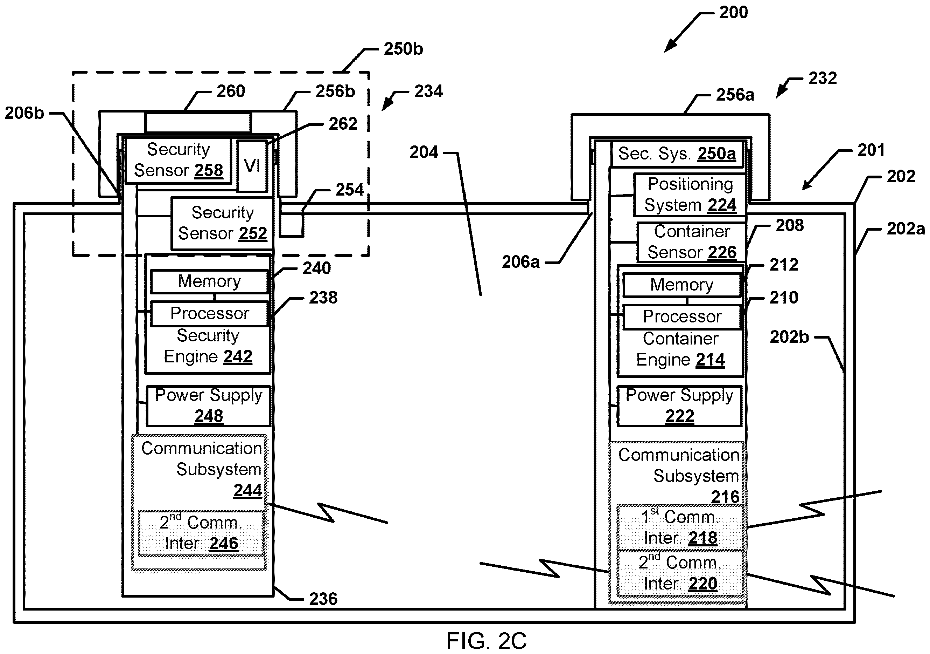

Referring now to Figs. 2A, 2B, and 2C, various embodiments of a container system 200 are illustrated. In various embodiments, the container system 200 may be the container system 102 discussed above with reference to Fig. 1. The container system 200 includes a container 201 having container chassis 202 that defines a container volume 204 and one or more apertures 206a and 206b that may provide for the storage of products in the container volume 204. The container chassis 202 may also house the components of the container system 200, only some of which are illustrated in Fig. 2C. For example, the container chassis 202 may house a container module 208 that includes a processing system 210 and a memory system 212. The memory system 212 is coupled to the processing system 210 and includes instructions that, when executed by the processing system 210, cause the processing system 210 to provide a container engine 214 that is configured to perform the functionality of the container engines and container systems, as well as any other functionality, discussed below.

The container module 208 and/or container chassis 202 may further house a communication subsystem 216 that is coupled to the container engine 214 (e.g., via a coupling between the communication subsystem 216 and the processing system 210). The communication subsystem 216 may include software or instructions that are stored on a computer-readable medium and that allow the container system 200 to send and receive information through the communication networks described herein. For example, the communication subsystem 216 may include a communication interface 218 (e.g., first (e.g., long-range) transceiver(s)) to provide for communications through the communication network 106 as detailed above. In an embodiment, the communication interface 218 may include a wireless antenna that is configured to provide communications via IEEE 802.11 protocols (Wi-Fi), cellular communications, satellite communications, other microwave radio communications, and/or utilizing any other communication techniques that would be apparent to one of skill in the art in possession of the present disclosure. The communication subsystem 216 may also include a communication interface 220 (e.g., second (e.g., short-range) transceiver(s)) that is configured to provide direct communication with user devices, sensors, closure subsystems, and other devices within the physical environment 101 discussed above with respect to Fig. 1. For example, the communication interface 220 may be configured to operate according to wireless protocols such as Bluetooth^{®}, Bluetooth^{®} Low Energy (BLE), near field communication (NFC), infrared data association (IrDA), ANT^{®}, Zigbee^{®}, Z-Wave^{®} IEEE 802.11 protocols (Wi-Fi), and/or any other wireless communication protocols that allow for the direct device communication described herein.

The container chassis 202 and/or container module 208 also houses a power supply system 222 that may include and/or be configured to couple to a battery. For example, the power supply system 222 may include an integrated rechargeable battery that may be recharged in the container chassis 202 using methods known in the art, and/or may include other power sources that would be apparent to one of skill in the art in possession of the present disclosure. In some embodiments, the user device 104 discussed above with reference to Fig. 1 may be configured to couple to the container chassis 202 (e.g., via a port system that includes a power port) that may provide for the recharging of a rechargeable battery included in the power supply system 222. In various embodiments, port systems may include a data port configured to communicate data between the container module 208 and the user device 104 (e.g., via a cable or other connector.) In other embodiments, the power supply system 222 may be configured to accept a replaceable, non-rechargeable battery while remaining within the scope of the present disclosure as well.

In various embodiments, the container chassis 202 and/or the container module 208 may also include a positioning system 224 that is coupled to the container engine 214. The positioning system 224 may include sensors that are configured to determine their current location and position. For example, the positioning system 224 may include a global positioning system (GPS) receiver, a real-time kinematic (RTK) GPS receiver, a differential GPS receiver, a Wi-Fi based positioning system (WPS) receiver, an accelerometer, and/or a variety of other positioning systems and components that would be apparent to one of skill in the art in possession of the present disclosure. In various embodiments, the container chassis 202 and/or the container module 208 may include one or more container sensors 226 that are coupled to the container engine 214 and configured to provide for the monitoring of conditions of the product and/or the container such as, for example, depth measurement sensors, load sensors, temperature sensors, humidity sensors, chemical agent sensors (e.g., to ensure authenticity of the product), orientation sensors, pressure sensors, movement sensors (e.g., an accelerometer), shock sensors, pH sensors, and/or any other sensors that would be apparent to one of skill in the art in possession of the present disclosure. The container sensors 226 may provide an indication that a tamper event has occurred, as discussed below, to the container and/or any other information about the product, container, and/or closure included with the container that would be apparent to one of skill in the art in possession of the present disclosure.

In various embodiments, the container module 208 may be housed in the container chassis 202 such as, for example, within the container volume 204 defined by the container chassis 202, within a chassis wall of the container chassis 202, and/or affixed or secured to an outside of the container chassis 202. For example, in Fig. 2B, the container system 200 may include a bottle container 228 that has a handle portion 228a within which the container module 208 is disposed. However, as discussed above, the container module 208 may also be attached to an exterior wall 202a that is opposite the container chassis 202 from an interior wall 202b that defines the container volume 204. In yet other embodiments, the container module 208 may be provided as a first closure subsystem 232, as illustrated in Fig. 2A and 2C, that may include some or all of the components of a second closure subsystem 234, discussed below, such as the security system 250a that includes one or more security sensors and/or the seal 256a illustrated in Fig. 2C. In yet other embodiments where a plurality of containers are being shipped together or another container is within communication range of the container chassis 202, the container module 208 may be housed in one of the containers and provide for communication with the other containers, forming a mesh or other type of local network. In various other embodiments, the container module 208 may be housed in a shipping container and/or shipping platform that includes the container chassis 202.

In various embodiments, the second closure subsystem 234 may include caps, plugs, tops, valves, lids, and/or other closure components that would be apparent to one of skill in the art in possession of the present disclosure. The second closure subsystem 234 includes a closure chassis 236 that is configured, when coupled to the container chassis 202, to prevent movement of the product from the container volume 204 and out to the exterior of the container chassis 202 via the aperture 206a and/or 206b. The closure chassis 236 houses a processing system 238 and a memory system 240 that is coupled to the processing system 238 and includes instruction that, when executed by the processing system 238, cause the processing system 238 to provide a security engine 242 that is configured to perform the functionality of the security engines and closure subsystems, as well as any other functionality, discussed below. While a processing system 238 and a memory system 240 are discussed as providing the security engine 242, the security engine 242 may be provided by application specific integrated circuits (ASICs), field-programmable gate arrays (FPGAs), complex programmable logic devices (CPLDs) and/or any other hardware circuit that may be configured to cause a communication interface, discussed below, to provide a notification in response to a security sensor signal being generated by a security sensor.

The closure chassis 236 may further house a communication subsystem 244 that is coupled to the security engine 242 (e.g., via a coupling between the communication subsystem 244 and the processing system 238). The communication subsystem 244 may include software or instructions that are stored on a computer-readable medium and that provide for the sending and receiving of information through the communication networks discussed above. For example, the communication subsystem 244 also includes a communication interface 246 (e.g., second (e.g., short-range) transceiver(s)) that is configured to provide direct communication with user devices, sensors, the container module 208, and other devices within the physical environment 101 discussed above with respect to Fig. 1. For example, the communication interface 246 may be configured to operate according to wireless protocols such as Bluetooth^{®}, Bluetooth^{®} Low Energy (BLE), near field communication (NFC), infrared data association (IrDA), ANT^{®}, Zigbee^{®}, Z-Wave^{®}, IEEE 802.11 protocols (Wi-Fi), and/or other wireless communication protocols that allow for direct communication between devices.

The closure chassis 236 may also house a power supply system 248 that may include or be configured to couple to a battery. For example, the power supply system 248 may include an integrated rechargeable battery that may be recharged in the closure chassis 236 using methods known in the art, and/or may include other power sources that would be apparent to one of skill in the art in the art in possession of the present disclosure. In some embodiments, the user device 104 discussed above with reference to Fig. 1 may be configured to couple to the closure chassis 236 (e.g., via a port system that includes a power port) and, in some cases, recharge a rechargeable battery included in the power supply system 248. In various embodiments, port systems may be provided that include a data port configured to communicate data between the closure subsystem 234 and the user device 104 (e.g., via a cable or other connector.) In other embodiments, the power supply system 248 may be configured to accept a replaceable, non-rechargeable battery while remaining within the scope of the present disclosure as well.

In various embodiments, the closure subsystem 234 includes a closure security system 250b. The closure security system 250b may include a closure security sensor 252 that is configured to provide a closure sensor signal when the closure subsystem 234 experiences a tamper event such as when the closure subsystem 234 is removed from the aperture 206b. For example, the closure security sensor 252 may be configured to provide a signal to the security engine 242 that indicates that the container chassis 202 and the closure chassis 236 have moved relative to each other (e.g., by some minimum distance) from a first (e.g. sealed) configuration to a second (e.g., unsealed) configuration. In specific embodiments, the container chassis 202 may house a magnet 254, and the closure security sensor 252 may include a Hall effect sensor that is configured to perform at least some of the functionality discussed above, although other sensors are envisioned as falling within the scope of the present disclosure as well.

In another example, the closure security system 250b may include a seal 256b that may include a device or substance that is configured to join the container chassis 202 and the closure chassis 236 together so as to resist them from coming apart and/or to prevent the product in the container volume 204 from passing between the container chassis 202 and the closure chassis 236. The closure chassis 236 may alternatively or additionally house a seal security sensor 258 that is configured to provide a seal sensor signal to the security engine 242 when the seal 256b experiences the tamper event such as when the seal 256b is removed from the closure chassis 236 and the container chassis 202. For example, the seal 256b may include an RFID tag 260 that may store a closure identifier (e.g., a seal identifier that is associated with the container system 200 and/or a container identifier stored in the container database 110) that identifies a container profile 110a. The seal security sensor 258 may include a RFID reader that is configured to provide the seal sensor signal to the security engine 242 when the seal 256 that includes the RFID tag 260 is removed from the closure chassis 236 and container chassis 202 (e.g., by a distance that prevents the reading of the RFID tag 260.) In another example, the seal security sensor 258 may include an NFC reader that may read an NFC tag in the seal 256b that includes an identifier (e.g., associated with the container system 200 and/or a container identifier stored in the container database 110) that identifies a container profile 110a. As such, the NFC reader may be configured to detect when the seal 256b is removed from the closure chassis 236 and container chassis 202 more than a relatively short distance (e.g., less than 10 cm.)

In another example, the seal security sensor 258 and/or the closure security sensor 252 may experience a tamper event when either the seal security sensor 258 and/or closure security sensor 252 is damaged. For example, an unscrupulous party may drill a hole into the closure chassis 236 without removing the closure chassis 236 or the seal 256b. The seal security sensor 258 and/or the closure security sensor 252 may be positioned within the closure chassis 236 and configured to provide a seal sensor signal, a closure sensor signal, and/or lack thereof if any one of the seal security sensor 258 and/or the closure security sensor 252 are damaged such as when the unscrupulous party damages one of the sensors 258 and/or 252 and/or other container sensors 226 while drilling into the closure chassis 236 or otherwise puncturing the closure chassis 236. Furthermore, pressure sensors in the container chassis 202 or closure subsystem 234 may detect a pressure drop in response to such accesses of the container housing (e.g., via drilling through the closure subsystem or container chassis), and that pressure drop may be interpreted as a tampering event as well.

In various embodiments, the closure security system 250b may also include one or more visual indicators 262 that may be provided on the exterior of the closure chassis 236 such that when a security sensor signal is received from the closure security sensor 252, a first visual indicator (e.g., a light emitting diode (LED)) may illuminate to provide a visual indication that the security sensor signal has been generated. Similarly, the first visual indicator or a second visual indicator may illuminate when the seal sensor signal has been generated. However, embodiments in which no visual indications are provided of security sensor signal receipt or generation will fall within the scope of the present disclosure as well. While a specific embodiment of the container system 200 and the closure subsystem 234 is illustrated and described herein, one of skill in the art in possession of the present disclosure will recognize that a wide variety of modification to the components and configuration of the container system 200 and the closure subsystem 234 will fall within the scope of the present disclosure as well.

While the embodiment illustrated in Fig. 2C illustrates a single closure subsystem 234, one of skill in the art in possession of the present disclosure will recognize that a container system may include any number of apertures that need a closure, and thus any number of closure subsystems may be provided with such multi-aperture containers, with each configured to communicate with the container module 208 substantially as discussed below.

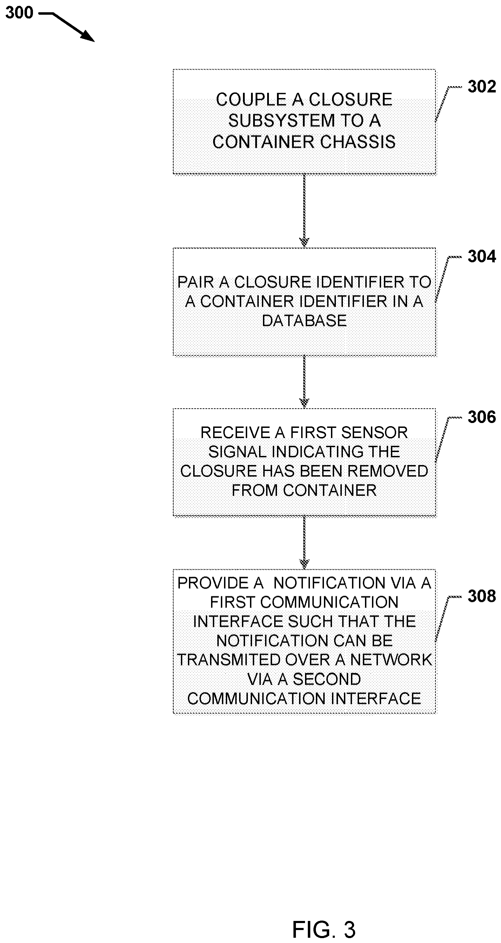

Referring now to Fig. 3, a method 300 for providing container security is illustrated. The method 300 begins at block 302 where a closure subsystem is coupled to a container chassis of a container system such that the closure subsystem prevents movement of a material stored in a container volume defined by the container chassis and out to an exterior of the container chassis via a first aperture defined by the container chassis. In an embodiment of block 302, the closure subsystem 234 may be coupled to the container chassis 202. In one example, the closure subsystem 234 may be a plug that is inserted into the aperture 206b and that is configured to prevent movement of materials located in the container volume 204 out of the container chassis 202 via the aperture 206b. In another example, the closure subsystem 234 may be a cap that is fitted over the aperture 206b and that prevents movement of materials located in the container volume 204 out of the container chassis 202 via the aperture 206b. However, the closure subsystem 234 may include a variety of closures that one of skill in the art in possession of the present disclosure would recognize would provide the functionality described herein.

The closure subsystem 234 may be coupled to the container chassis 202 during several stages of a container system's life cycle. For example, a container manufacture may couple the closure subsystem 234 to the container chassis 202 after manufacturing the container system 200 in order to prevent contaminates from entering the container volume 204 before the container system has reached a container filler (which may be particularly beneficial when the container volume 204 has been sterilized.) Furthermore, a second closure subsystem 234 may be also be coupled to the container chassis 202 after the container filler has received the container system 200 and removed the first closure subsystem 234 to fill the container volume 204 with a product in order to prevent contaminants from contaminating the product and/or to prevent the product from escaping (or being removed from) the container volume 204 via the aperture 206b during transport of the container system 200 to an end user. Further still, the end user may remove the second closure subsystem 234 to retrieve the product from the container volume 204, and may replace the second closure subsystem 234 with a third closure subsystem 234 for tracking purposes and/or secure storage of any unused product (e.g., at the end user's facility.) The container chassis 202 may be returned to the container manufacturer or a container cleaning facility when the end user is finished with it, with or without a closure subsystem (e.g., because contamination and loss of the product is not typically a factor once the product has been dispensed from the container volume 206.)

In various embodiments of block 302, the seal 256b may be additionally coupled to the closure chassis 236 and the container chassis 202. As discussed above, the seal 256b may be configured to join the container chassis 202 and the closure chassis 236 together so as to prevent them from being detached and/or to prevent of the product from passing between the container chassis 202 and the closure chassis 236.

The method 300 may then proceed to block 304 where at least one closure identifier of the closure subsystem is paired with a container identifier of the container. In an embodiment of block 304, a closure identifier of the closure subsystem 234 may be paired with a container identifier of the container 201. For example, the user device 104 and/or the network service platform 108 may be used to enter the container identifier of the container 201, the closure identifier of the closure subsystem 234, and/or any other information as part of a container profile 110a that is stored in the container database 110 (e.g., local to the user device 104 and/or via the network service platform 108.) In various examples, the closure identifier and/or the container identifier may include tokens, characters, strings, or any identifiers for differentiating a closure subsystem from another closure subsystem and a container from another container. For example, the closure identifier and the container identifier may include internet protocol addresses, network addresses, media access control (MAC) addresses, universally unique identifiers (UUIDs), phone numbers, and/or any other identifier that may be used to identify the closure subsystem 234. In various embodiments, the closure identifier may include a seal identifier of the seal 256 (e.g., an RFID identifier), an identifier of the communication interface 246 housed in the closure chassis 236 (e.g., a UUID of a BT communication interface), identifiers such as serial numbers stored in the memory 240 that provides by the security engine 242, and/or any other identifier that may be electronically provided and, in some cases, encrypted. Similarly, when the container module 208 is housed in the container chassis 202, the container identifier may include any identifier of the communication interfaces 218 and/or 220, an identifier stored in the memory 212 and/or other mass storage device included in the container module 208, a QR code that is attached to the container chassis 202, a serial number, and/or any other identifiers that would be apparent to one of skill in the art in possession of the present disclosure.

In various embodiments, any other information about the container system 200, the container module 208, the closure subsystem 234, the product stored within the container, parties associated with the container, location data, sensor data, and/or other information that would be apparent to one of skill in the art in possession of the present disclosure, may be stored and associated with the closure identifier and the container identifier as part of the container profile 110a.

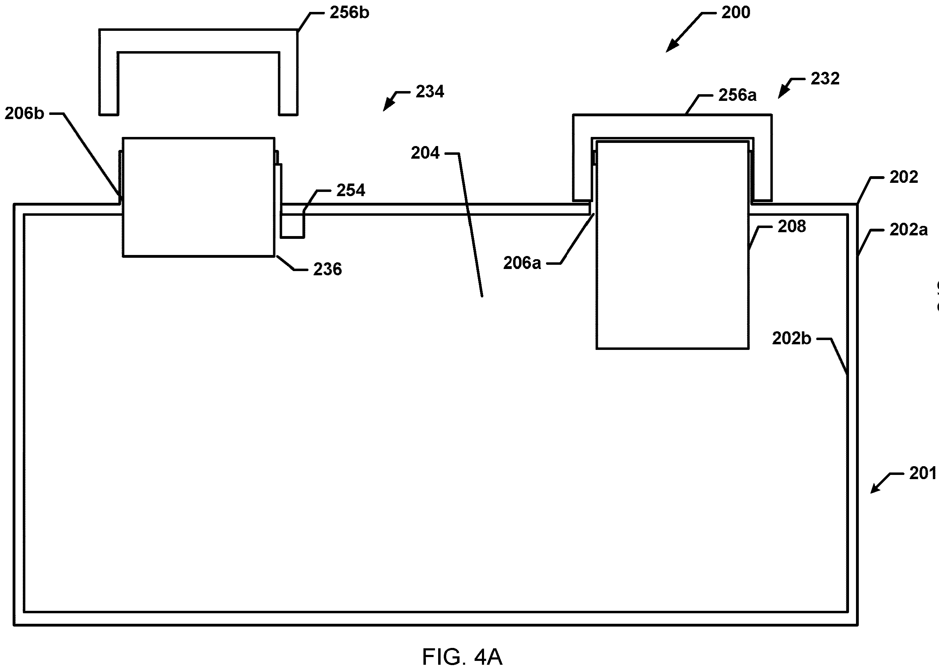

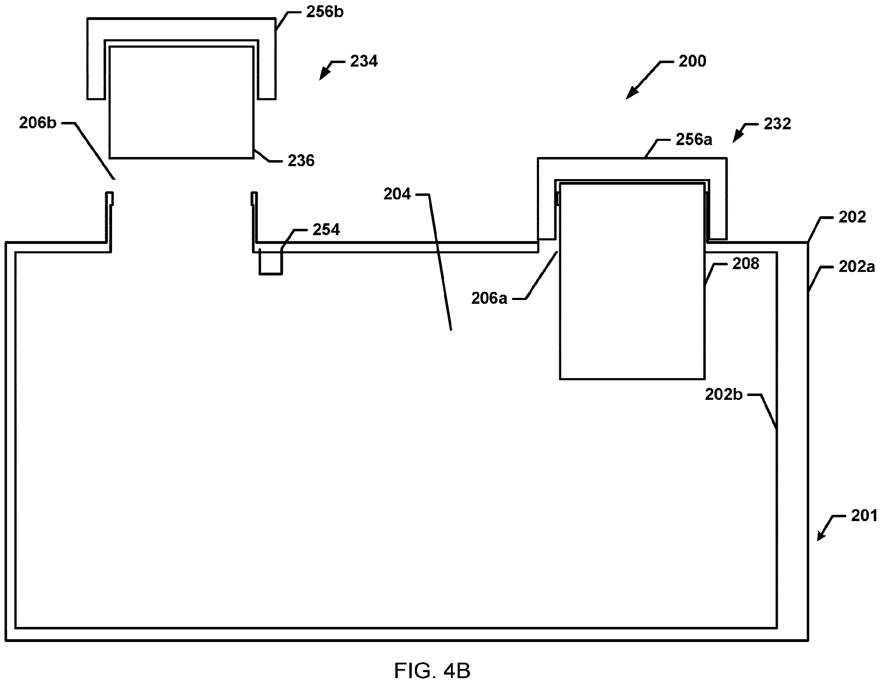

The method 300 may then proceed to block 306 where the closure subsystem detects a security sensor signal. In an embodiment of block 306, the security engine 242 may detect a security sensor signal indicating a tamper event has occurred. For example, and as illustrated in Fig. 4A, the security engine 242 may detect a seal sensor signal provided by the seal security sensor 258 when the seal 256b has been removed from the closure chassis 236 and the container chassis 202 (e.g., by some minimum distance such as an RFID or NFC readable distance.) In another example, and as illustrated in Fig. 4B, the closure security sensor 252 may provide the security sensor signal to the security engine 242 when the closure security sensor 252 detects that the closure chassis 236 has been removed from the container chassis 202 (e.g., whether or not the seal 256b has been removed from the closure chassis 236) by some minimum distance. In another example, the closure security sensor 252 and/or the seal security sensor 258 may provide the closure sensor signal and/or the seal security sensor signal, respectively if either of the closure security sensor 252 and/or the seal security sensor 258 are damaged in any way. In various examples, the seal sensor signal and the closure sensor signal may be distinct signals generated by separate sensors, and may be independently generated based on which of the seal 256b and/or the closure is removed, and thus may provide different information. Thus, if the seal 256b were also removed from the closure chassis in Fig. 4B, the seal security sensor 258 would generate a seal sensor signal that is separate from the closure sensor signal. However, in other examples, the seal sensor signal and the closure sensor signal may be the same signal generated by the same sensor. In various other examples, a tamper event may be detected by any of the other container sensors 226 such as a change in pressure by a pressure sensor indicating a puncture in the container chassis 202, a change in pH by a pH sensor indicating a diluted solution, and other sensors discussed above that may provide a security sensor signal to the security engine 242. In various embodiments, the security sensor signal and/or the seal sensor signal may include an identifier that is associated with the closure security sensor 252 and the seal security sensor 258, respectively, and/or identifier(s) associated with the closure subsystem 234 and/or any other information regarding the container subsystem, the product, the parties associated with the container, the container module, and/or other information that would be apparent to one of skill in the art in possession of the present disclosure.

The method 300 may then proceed to block 308 where, in response to detecting the security sensor signal by the closure subsystem, a notification is provided via a first type communication system that the closure subsystem has been moved relative to the first aperture. In an embodiment of block 308, a security sensor signal (e.g., the closure sensor signal from the closure security sensor 252, the seal sensor signal from the seal security sensor 258, and/or any security sensor signals from other sensors 226 that may be housed in the closure chassis) may cause the security engine 242 to generate a notification that is communicated over the communication interface 246 to the communication interface 220 of the container module 208. However, in other embodiments, the communication interface 246 of the communication subsystem 244 may provide the notification to the user device 104 that is within range of the communication interface 246. In other embodiments, the security engine 242 may store the notification in the memory 240 and/or other storage devices included in the closure subsystem 234 until the communication subsystem 244 is within range of a device/communication interface with which the communication interface 246 can communicate.

In examples where the notification is provided to the communication interface 220, the container engine 214 may cause the communication interface 218 to provide the notification over the network 106 to the user device 104 and/or the network service platform 108. In another embodiment, the container engine 214 may store the notification in the memory 212 or other storage device (e.g., in the event that communications between the network 106 and the communication interface 218 are unavailable and/or there is no user device 104 in direct communication with the communication interface 220.) For example, if the container system 200, while being transported, is taken to a location where cellular service for the communication interface 218 is unavailable, and then one of the seal 256b and/or the closure chassis 236 is removed from the container system 200 to cause a security sensor signal to be generated, the resulting notification may be stored by the container module 208 until the container system 200 determines it can communicate that signal through the network 106 via an available cellular service.

The notification provided at block 308 may include at least a closure identifier, a seal identifier, and/or any other identifier associated with the closure subsystem 234. However, in other examples, the notification may include a time at which the security sensor generated the signal, a location where that signal was generated (e.g., determined via the positioning system 224), any container sensor data gathered from the container sensors 226, any container module identifiers, any container identifiers, product information, and any other information that would be apparent to one of skilled in the art in possession of the present disclosure.

The notification provided at block 308 may allow the network service platform 108 to use the closure subsystem identifier therein to locate the corresponding container profile 110a in the container database 110 and log any of the information that is included in that notification. In response to receiving the notification at block 308, the network service platform 108 may also provide an alert to any of the parties associated with the container system 200 such as, for example, providing an alert to a user device 104 that is associated with the container system 200, which may notify an administrator of the security event detected by the closure security system 250b. In other embodiments, when the user device 104 first receives the notification, the user device 104 may generate an alert through a user interface such as, for example, a graphical user interface alert, a vibration, a sound, and/or any other alert that would be apparent to one of skill in the art in possession of the present disclosure. The user device 104 may also provide the notification to the network service platform 108 to cause the network service platform to retrieve other information associated with the received closure subsystem identifier, and/or cause the network service platform 108 to log the security event in the container profile 110a for the container system 200 such that other parties and user devices 104 associated with the container system 200 may receive the alert as well.

In various embodiments, the security engine 242 may also cause the visual indicator 262 included in the closure security system 250b to activate and provide a visual indication on the exterior of the closure chassis 236 of the security event. For example, one or more LEDs may illuminate (or shut off) in response to one or more security sensor signals generated by the seal security sensor 258 and/or the closure security sensor 252. For example, a first LED may illuminate upon the security engine 242 receiving a closure sensor signal, and/or a second LED may illuminate in response to the security engine 242 receiving a seal sensor signal. In various embodiments, the visual indicator 262 may be provided in the container module 208 and/or other locations on the container chassis 202.

In various embodiments, the container sensors 226, such as a depth sensor, pressure sensor, and/or level sensor, may be used in conjunction with the closure security system 250a and/or 250b to perform a variety of other functions besides security. For example, the depth and/or pressure sensors of the container system 200 may be configured to cause the container module 208 to provide an indication to the network service platform 108 and/or user device 104 of a replacement of supply event (e.g., an indication to refill the product) and/or a collection event (e.g., collect the container system 200 for cleaning and reuse). Many container systems 200 may undergo multiple filling and reuse cycles and the automatic triggering of a collection notification once emptied and location of the container may be used to improve the reuse of the container system 200. In other examples, additional sales of the product within the container may be automated when the container system 200 is emptied and may be indicated by a level sensor that is activated once the closure security system 250a detects a tamper event. The level sensor may be an active sensor, and thus only activated after a tamper event is detected such that the level sensor does not drain the battery included in the power supply 222 and/or 248.

In a specific example utilizing the systems and methods of the present disclosure, the closure in the container system that includes the closure chassis 236 and/or the seal 256b includes an RFID tag or similar intelligent tag that stores encrypted information including an encrypted identifier which is difficult to replicate or replace. A security sensor (e.g., closure security sensor 252 and/or seal security sensor 258) is included in the closure chassis 236 and/or container chassis 202, and includes an RFID reader, which reads the RFID tag to verify nothing has changed with the seal 256b and/or the closure chassis 236 (i.e., verify that the RFID tag has not been replaced with another RFID tag that includes a different RFID identifier than what is expected and/or that the original RFID tag has been continually present). The RFID reader is configured to broadcast the encrypted information included in the RFID tag to a standard interface such as a BT communication interface or a Wi-Fi communication interface housed within the closure chassis 236 and/or the container chassis 202 such that a dedicated identification reader (e.g., RFID reader) is not needed by an end user, and rather the end user can use a conventional mobile phone or other user device to determine whether a tamper event occurred with the container. This reduces barriers to entry and costs as the specific RFID reader is not required to receive information from the container system 200.

Thus, systems and methods have been described that provide for detection of closure subsystem removal from a container system, as well as the provisioning of a notification of a security event to parties that have an interest in that container system. The closure subsystem may include one or more security sensors that generate a security sensor signal when at least one of a closure or a seal is removed from the container system. The closure subsystem may communicate this security event to a container module via a second type communication interface such that the container module can communicate the event through a first type communication interface that has a longer range than the second type communication interface. The first type communication interface, because of its longer range, typically has greater power requirements, and thus is typically more expensive and greater in size and weight due to the need for larger batteries and circuits. Therefore, embodiments of the present disclosure provide a cost effective and power efficient system in situations where there are multiple apertures in the container system that need a disposable closure subsystem, situations where the container module does not include a security system, and/or situations where the container module is located within the container volume or exterior to the container chassis As such, the container system may provide security for the container by monitoring and reporting theft of a product stored there, detecting and notifying of events that may have cause contamination of the product or container, and/or other detecting and notifying any other events that occur to the container through its life cycle.

Referring now to Fig. 5, an embodiment of a computer system 500 suitable for implementing, for example, the container system 102 and 200, the user device 104, and/or the network service platform 108, is illustrated. It should be appreciated that other devices utilized in the container network system discussed above may be implemented as the computer system 500 in a manner as follows.

In accordance with various embodiments of the present disclosure, computer system 500, such as a computer and/or a network server, includes a bus 502 or other communication mechanism for communicating information, which interconnects subsystems and components, such as a processing component 504 (e.g., processor, micro-controller, digital signal processor (DSP), etc.), a system memory component 506 (e.g., RAM), a static storage component 508 (e.g., ROM), a disk drive component 510 (e.g., magnetic or optical), a network interface component 512 (e.g., modem or Ethernet card), a display component 514 (e.g., CRT or LCD), an input component 518 (e.g., keyboard, keypad, or virtual keyboard), a cursor control component 520 (e.g., mouse, pointer, or trackball), and/or a location determination component 522 (e.g., a Global Positioning System (GPS) device as illustrated, a cell tower triangulation device, and/or a variety of other location determination devices known in the art.) In one implementation, the disk drive component 510 may comprise a database having one or more disk drive components.

In accordance with embodiments of the present disclosure, the computer system 500 performs specific operations by the processor 504 executing one or more sequences of instructions contained in the memory component 506, such as described herein with respect to the container system 102 and 200, the user device 104, and/or the network service platform 108,. Such instructions may be read into the system memory component 506 from another computer readable medium, such as the static storage component 508 or the disk drive component 510. In other embodiments, hard-wired circuitry may be used in place of or in combination with software instructions to implement the present disclosure.

Logic may be encoded in a computer readable medium, which may refer to any medium that participates in providing instructions to the processor 504 for execution. Such a medium may take many forms, including but not limited to, non-volatile media, volatile media, and transmission media. In one embodiment, the computer readable medium is non-transitory. In various implementations, non-volatile media includes optical or magnetic disks, such as the disk drive component 510, volatile media includes dynamic memory, such as the system memory component 506, and transmission media includes coaxial cables, copper wire, and fiber optics, including wires that comprise the bus 502. In one example, transmission media may take the form of acoustic or light waves, such as those generated during radio wave and infrared data communications.

Some common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, carrier wave, or any other medium from which a computer is adapted to read. In one embodiment, the computer readable media is non-transitory.

In various embodiments of the present disclosure, execution of instruction sequences to practice the present disclosure may be performed by the computer system 500. In various other embodiments of the present disclosure, a plurality of the computer systems 500 coupled by a communication link 524 to the network 106 (e.g., such as a LAN, WLAN, PTSN, and/or various other wired or wireless networks, including telecommunications, mobile, and cellular phone networks) may perform instruction sequences to practice the present disclosure in coordination with one another.

The computer system 500 may transmit and receive messages, data, information and instructions, including one or more programs (i.e., application code) through the communication link 524 and the network interface component 512. The network interface component 512 may include an antenna, either separate or integrated, to enable transmission and reception via the communication link 524. Received program code may be executed by processor 504 as received and/or stored in disk drive component 510 or some other non-volatile storage component for execution.

The present disclosure may be implemented using hardware, software, or combinations of hardware and software. Also, where applicable, the various hardware components and/or software components set forth herein may be combined into composite components comprising software, hardware, and/or both without departing from the scope of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software, in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, persons of ordinary skill in the art will recognize that changes may be made in form and detail without departing from the scope of the present disclosure. Thus, the present disclosure is limited only by the claims.

## Claims

1. A container system (102, 200), comprising:
a container chassis (202) defining a container volume (204) and a first aperture (206b); and
a closure subsystem (234) coupled to the container chassis (202), wherein the closure subsystem (234) comprises:
a closure chassis (236) that is configured, when coupled to the container chassis (202), to prevent movement of a material between the container volume (204) and an exterior of the container chassis (202) via the first aperture (206b), said closure chassis (236) comprising an RFID tag that stores encrypted information including an encrypted identifier;
a first sensor subsystem (250b) that is coupled to the closure chassis (236) and that is configured to generate a first sensor signal when the closure chassis (236) experiences a tamper event;
a first type communication interface (246) housed in the closure chassis (236);
a first processing system (238) that is housed in the closure chassis (236) and that is coupled to the first type communication interface (246) and the first sensor subsystem (250a); and
a first memory system (240) that is housed in the closure chassis (236) and that includes instruction that, when executed by the first processing system (238), causes the first processing system (238) to provide a security engine (242) that is configured to:
receive a first sensor signal indicating that the closure chassis (236) has experienced the tamper event; and
provide, in response to receiving the first sensor signal using the first type communication interface (246), a first notification to a corresponding first type communication interface (220) that the closure chassis (236) has experienced the tamper event,
**characterized in that**
said closure chassis (236) and/or the container chassis (202) includes a security sensor that includes an RFID reader, the RFID tag reader being configured to read the RFID tag and to broadcast the encrypted information included in the RFID tag to a standard communication interface housed within the closure chassis (236) and/or the container chassis (202).

2. The container system (102, 200) of claim 1, wherein the closure chassis (236) includes a closure portion that is inserted into the first aperture (206b), and wherein the first sensor subsystem (250b) is configured to generate the first sensor signal indicating the tamper event when the closure portion is at least one of being removed from the first aperture (206b), damaged or replaced.

3. The container system (102, 200) of claim 1 or 2, wherein the closure chassis (236) further includes a seal (256b) coupling together the container chassis (202) and the closure chassis (236) and a second sensor subsystem (250a), wherein the second sensor subsystem is configured to generate a second sensor signal indicating the tamper event when the seal (256b) is at least one of being removed from the container chassis (202), damaged, or replaced, and/or
wherein the closure chassis (236) further includes a seal (256b) coupling together the container chassis (202) and the closure chassis (236), wherein the first sensor subsystem (250a) is configured to generate the first sensor signal indicating the tamper event when the seal (256b) is at least one of being removed from the container chassis (202), damaged, or replaced.

4. The container system (102, 200) of any one of the preceding claims, further comprising a container module (208) that is disposed within the container volume (204), wherein the container module (208) includes:
the corresponding first type communication interface (220);
a second type communication interface (218);
a second processing system (210) that is coupled to the corresponding first type communication interface (220) and the second type communication interface (218); and
a second memory system (212) that includes instruction that, when executed by the second processing system (210), causes the second processing system (210) to provide a container engine that is configured to:
receive the first notification that the closure chassis (236) has experienced the tamper event; and
provide, using the second type communication interface (218) and via a wide area network, the first notification to a network service platform (108).

5. The container system (102, 200) of claim 4, wherein the container engine is configured to:
determine that the wide area network is unavailable; and
store the first notification in a local database until the wide area network is again available.

6. The container system (102, 200) of any one of the preceding claims, wherein the closure subsystem (234) further comprises a visual indicator (262) positioned on the exterior of the closure chassis (236) and, wherein the security engine (242) is configured to cause the visual indicator (262) to provide a first visual indication when the closure chassis (236) has experienced the tamper event.

7. A closure system, comprising:
a closure chassis (236) that is configured, when coupled to a container chassis (202), to prevent movement of a material between a container volume (204) defined by the container chassis (202) and an exterior of the container chassis (202) via a first aperture (206b) defined by the container chassis (202), said closure chassis (236) comprising an RFID tag that stores encrypted information including an encrypted identifier;
a first sensor subsystem (250b) that is coupled to the closure chassis (236) and that is configured to generate a first sensor signal when the closure chassis (236) is moved relative to the first aperture (206b);
a first type communication interface (246) housed in the closure chassis (236);
a first processing system (238) that is housed in the closure chassis (236) and that is coupled to the first type communication interface (246) and the first sensor subsystem (250b); and
a first memory system (240) that is housed in the closure chassis (236) and that includes instruction that, when executed by the first processing system (238), causes the first processing system (238) to provide a first security engine (242) that is configured to:
receive a first sensor signal indicating that the closure chassis (236) has experienced a tamper event; and
provide, in response to receiving the first sensor signal using the first type communication interface (246), a first notification to a corresponding first type communication interface (220) that the closure chassis (236) has experienced the tamper event;
**characterized in that**
said closure chassis (236) includes a security sensor that includes an RFID tag reader, the RFID tag reader being configured to read the RFID tag and to broadcast the encrypted information included in the RFID tag to a standard communication interface housed within the closure chassis (236) and/or the container chassis (202).

8. The closure system of claim 7, wherein the closure chassis (236) includes a closure portion that is inserted into the first aperture (206b), and wherein the first sensor subsystem (250b) is configured to generate the first sensor signal indicating the tamper event when the closure portion is at least one of being removed from the first aperture (206b), damaged, or replaced, and/or
wherein the closure chassis (236) further includes a seal (256b) coupling together the container chassis (202) and the closure chassis (236) and a second sensor subsystem (250a), wherein the second sensor subsystem (250a) is configured to generate a second sensor signal indicating the tamper event when the seal (256b) is at least one of being removed from the container chassis (202), damaged, or replaced, and/or
wherein the closure chassis (236) further includes a seal (256b) coupling together the container chassis (202) and the closure chassis (236), wherein the first sensor subsystem (250b) is configured to generate the first sensor signal indicating the tamper event when the seal (256b) is at least one of being removed from the container chassis (202), damaged, or replaced.

9. The closure system of claim 7 or 8, wherein the providing, in response to receiving the first sensor signal using the first type communication interface (246), the first notification to the corresponding first type communication interface (220) that the closure chassis (236) experienced the tamper event includes providing the first notification to a container module (208) that is disposed within the container volume (204), which causes the container module (208) to provide, using a second type communication interface (218) and via a wide area network, the first notification to a network service platform (108).

10. The closure system of claim 9, wherein the container module (208) stores the first notification in a local database until the wide area network is available.

11. The closure system of any one of claims 7 to 10, wherein the closure chassis (236) further comprises a visual indicator (262) positioned on the exterior of the closure chassis (236), and wherein the first security engine (242) is configured to cause the visual indicator (262) to provide a first visual indication when the closure chassis (236) has experienced the tamper event.

12. A container closure security method, comprising:
capturing, by a closure system via a first sensor, a first sensor signal that indicates at least a portion of closure system, coupled to a container such that the closure system prevents movement of a material between a container volume (204) defined by the container and an exterior of the container via a first aperture (206b) defined by the container, has experienced a tamper event; and
providing, in response to receiving the first sensor signal by the closure system, a first notification via a first type communication interface (246) to a corresponding first type communication interface (220) that the closure system has experienced the tamper event,
**characterized by** said closure system comprising an RFID tag that stores encrypted information including an encrypted identifier and a security sensor that includes an RFID tag reader,
said method being further **characterized by** the following step:
by the RFID reader, reading the RFID tag and broadcasting the encrypted information included in the RFID tag to a standard communication interface housed within the closure system and/or the container.

13. The method of claim 12, further comprising:
generating, by the closure sensor included in the closure system, the first sensor signal indicating the tamper event when the closure portion is at least one of removed from the first aperture (206b) or damaged.

14. The method of claim 13, further comprising:
generating by a seal (256b) sensor included in the closure system, a second sensor signal indicating the tamper event when a seal (256b) included on the closure system is at least one of being removed from the container, damaged, or replaced.

15. The method of any one of claims 12 to 14, further comprising:
generating, by a seal sensor included in the closure system, the first sensor signal indicating the tamper event when a seal (256b) included on the closure system is at least one of being removed from the container, damaged, or replaced, and/or
wherein the providing, in response to receiving the first sensor signal using the first type communication interface (246), the first notification to the corresponding first type communication interface (220) that the closure system experienced the tamper event includes providing the first notification to a container module (208) that is disposed within the container volume (204), and causes the container module (208) to provide, using a second type communication interface (218) and via a wide area network, the first notification to a network service platform (108), and/or
activating, by the closure system, a visual indicator (262) to provide a first visual indication when the closure system has experienced the tamper event.

## Patentansprüche

1. Containersystem (102, 200), umfassend:
ein Containergehäuse (202), das ein Containervolumen (204) und eine erste Öffnung (206b) definiert; und
ein Verschlussteilsystem (234), das an das Containergehäuse (202) gekoppelt ist, wobei das Verschlussteilsystem (234) umfasst:
ein Verschlussgehäuse (236) das ausgelegt ist, wenn es an das Containergehäuse (202) gekoppelt ist, Bewegung eines Materials zwischen dem Containervolumen (204) und einer Außenseite des Containergehäuses (202) über die erste Öffnung (206b) zu verhindern, wobei das Verschlussgehäuse (236) ein RFID-Tag umfasst, das verschlüsselte Informationen speichert, die eine verschlüsselte Kennung beinhalten;
ein erstes Sensorteilsystem (250b), das an das Verschlussgehäuse (236) gekoppelt ist, und das ausgelegt ist, ein erstes Sensorsignal zu erzeugen, wenn das Verschlussgehäuse (236) ein Manipulationsereignis erfährt;
eine erste Art von Kommunikationsschnittstelle (246), die in dem Verschlussgehäuse (236) untergebracht ist;
ein erstes Verarbeitungssystem (238), das in dem Verschlussgehäuse (236) untergebracht ist und das an die erste Art von Kommunikationsschnittstelle (246) und das erste Sensorteilsystem (250a) gekoppelt ist; und
ein erstes Speichersystem (240), das in dem Verschlussgehäuse (236) untergebracht ist und das eine Anweisung beinhaltet, die, wenn sie von dem ersten Verarbeitungssystem (238) ausgeführt wird, das erste Verarbeitungssystem (238) veranlasst, eine Sicherheitsengine (242) bereitzustellen, die ausgelegt ist zum:
Empfangen eines ersten Sensorsignals, das anzeigt, dass das Verschlussgehäuse (236) das Manipulationsereignis erfahren hat; und
Bereitstellen, in Reaktion auf Empfangen des ersten Sensorsignals unter Verwendung der ersten Art von Kommunikationsschnittstelle (246), einer ersten Benachrichtigung an eine entsprechende erste Art von Kommunikationsschnittstelle (220), dass das Verschlussgehäuse (236) das Manipulationsereignis erfahren hat,
**dadurch gekennzeichnet, dass**
das Verschlussgehäuse (236) und/oder das Containergehäuse (202) einen Sicherheitssensor beinhaltet, der ein RFID-Lesegerät beinhaltet, wobei das RFID-Tag-Lesegerät dazu ausgelegt ist, das RFID-Tag zu lesen und die verschlüsselten Informationen, die im RFID-Tag beinhaltet sind, an eine Standardkommunikationsschnittstelle auszusenden, die im Verschlussgehäuse (236) und/oder im Containergehäuse (202) untergebracht ist.

2. Containersystem (102, 200) nach Anspruch 1, wobei das Verschlussgehäuse (236) einen Verschlussabschnitt beinhaltet, der in die erste Öffnung (206b) eingesetzt ist, und wobei das erste Sensorteilsystem (250b) ausgelegt ist, das erste Sensorsignal zu erzeugen, das das Manipulationsereignis anzeigt, wenn der Verschlussabschnitt mindestens eines von aus der ersten Öffnung (206b) entfernt, beschädigt oder ausgetauscht ist.

3. Containersystem (102, 200) nach Anspruch 1 oder 2, wobei das Verschlussgehäuse (236) weiter eine Dichtung (256b), die das Containergehäuse (202) und das Verschlussgehäuse (236) aneinander koppelt, und ein zweites Sensorteilsystem (250a) beinhaltet, wobei das zweite Sensorteilsystem ausgelegt ist, ein zweites Sensorsignal zu erzeugen, das das Manipulationsereignis anzeigt, wenn die Dichtung (256b) mindestens eines von aus dem Containergehäuse (202) entfernt, beschädigt oder ausgetauscht ist, und/oder
wobei das Verschlussgehäuse (236) weiter eine Dichtung (256b), die das Containergehäuse (202) und das Verschlussgehäuse (236) aneinander koppelt, beinhaltet, wobei das erste Sensorteilsystem (250a) ausgelegt ist, das erste Sensorsignal zu erzeugen, dass das Manipulationsereignis anzeigt, wenn die Dichtung (256b) mindestens eines von aus dem Containergehäuse (202) entfernt, beschädigt oder ausgetauscht ist.

4. Containersystem (102, 200) nach einem der vorstehenden Ansprüche, weiter umfassend ein Containermodul (208), das in dem Containervolumen (204) angeordnet ist, wobei das Containermodul (208) beinhaltet:
die entsprechende erste Art von Kommunikationsschnittstelle (220);
eine zweite Art von Kommunikationsschnittstelle (218);
ein zweites Verarbeitungssystem (210), das an die entsprechende erste Art von Kommunikationsschnittstelle (220) und die zweite Art von Kommunikationsschnittstelle (218) gekoppelt ist; und
ein zweites Speichersystem (212), das eine Anweisung beinhaltet, die, wenn von dem zweiten Verarbeitungssystem (210) ausgeführt, das zweite Verarbeitungssystem (210) veranlasst, eine Containerengine bereitzustellen, die ausgelegt ist zum:
Empfangen der ersten Benachrichtigung, dass das Verschlussgehäuse (236) das Manipulationsereignis erfahren hat; und
Bereitstellen, unter Verwendung der zweiten Art von Kommunikationsschnittstelle (218) und über ein Weitverkehrsnetzwerk, der ersten Benachrichtigung an eine Netzwerkdienstplattform (108).

5. Containersystem (102, 200) nach Anspruch 4, wobei die Containerengine ausgelegt ist zum:
Bestimmen, dass das Weitverkehrsnetzwerk nicht verfügbar ist; und
Speichern der ersten Benachrichtigung in einer lokalen Datenbank bis das Weitverkehrsnetzwerk wieder verfügbar ist.

6. Containersystem (102, 200) nach einem der vorstehenden Ansprüche, wobei das Verschlussteilsystem (234) weiter einen visuellen Indikator (262) umfasst, der an der Außenseite des Verschlussgehäuses (236) positioniert ist, und wobei die Sicherheitsengine (242) ausgelegt ist, den visuellen Indikator (262) zu veranlassen, eine erste visuelle Anzeige bereitzustellen, wenn das Verschlussgehäuse (236) das Manipulationsereignis erfahren hat.

7. Verschlusssystem, umfassend:
ein Verschlussgehäuse (236) das ausgelegt ist, wenn es an ein Containergehäuse (202) gekoppelt ist, Bewegung eines Materials zwischen einem Containervolumen (204), das durch das Containergehäuse (202) definiert ist, und einer Außenseite des Containergehäuses (202) über eine erste Öffnung (206b), die durch das Containergehäuse (202) definiert ist, zu verhindern, wobei das Verschlussgehäuse (236) ein RFID-Tag umfasst, das verschlüsselte Informationen speichert, die eine verschlüsselte Kennung beinhalten;
ein erstes Sensorteilsystem (250b), das an das Verschlussgehäuse (236) gekoppelt ist, und das ausgelegt ist, ein erstes Sensorsignal zu erzeugen, wenn das Verschlussgehäuse (236) relativ zu der ersten Öffnung (206b) bewegt wird;
eine erste Art von Kommunikationsschnittstelle (246), die in dem Verschlussgehäuse (236) untergebracht ist;
ein erstes Verarbeitungssystem (238), das in dem Verschlussgehäuse (236) untergebracht ist und das an die erste Art von Kommunikationsschnittstelle (246) und das erste Sensorteilsystem (250a) gekoppelt ist; und
ein erstes Speichersystem (240), das in dem Verschlussgehäuse (236) untergebracht ist und das eine Anweisung beinhaltet, die, wenn sie von dem ersten Verarbeitungssystem (238) ausgeführt wird, das erste Verarbeitungssystem (238) veranlasst, eine erste Sicherheitsengine (242) bereitzustellen, die ausgelegt ist zum:
Empfangen eines ersten Sensorsignals, das anzeigt, dass das Verschlussgehäuse (236) ein Manipulationsereignis erfahren hat; und
Bereitstellen, in Reaktion auf Empfangen des ersten Sensorsignals unter Verwendung der ersten Art von Kommunikationsschnittstelle (246), einer ersten Benachrichtigung an eine entsprechende erste Art von Kommunikationsschnittstelle (220), dass das Verschlussgehäuse (236) das Manipulationsereignis erfahren hat;
**dadurch gekennzeichnet, dass**
das Verschlussgehäuse (236) einen Sicherheitssensor beinhaltet, der ein RFID-Tag-Lesegerät beinhaltet, wobei das RFID-Tag-Lesegerät dazu ausgelegt ist, das RFID-Tag zu lesen und die verschlüsselten Informationen, die im RFID-Tag beinhaltet sind, an eine Standardkommunikationsschnittstelle auszusenden, die im Verschlussgehäuse (236) und/oder im Containergehäuse (202) untergebracht ist.

8. Verschlusssystem nach Anspruch 7, wobei das Verschlussgehäuse (236) einen Verschlussabschnitt beinhaltet, der in die erste Öffnung (206b) eingesetzt ist, und wobei das erste Sensorteilsystem (250b) ausgelegt ist, das erste Sensorsignal zu erzeugen, das das Manipulationsereignis anzeigt, wenn der Verschlussabschnitt mindestens eines von aus der ersten Öffnung (206b) entfernt, beschädigt oder ausgetauscht ist, und/oder
wobei das Verschlussgehäuse (236) weiter eine Dichtung (256b), die das Containergehäuse (202) und das Verschlussgehäuse (236) aneinander koppelt, und ein zweites Sensorteilsystem (250a) beinhaltet, wobei das zweite Sensorteilsystem (250a) ausgelegt ist, ein zweites Sensorsignal zu erzeugen, das das Manipulationsereignis anzeigt, wenn die Dichtung (256b) mindestens eines von aus dem Containergehäuse (202) entfernt, beschädigt oder ausgetauscht ist, und/oder
wobei das Verschlussgehäuse (236) weiter eine Dichtung (256b) beinhaltet, die das Containergehäuse (202) und das Verschlussgehäuse (236) aneinander koppelt, wobei das erste Sensorteilsystem (250b) ausgelegt ist, das erste Sensorsignal zu erzeugen, dass das Manipulationsereignis anzeigt, wenn die Dichtung (256b) mindestens eines von aus dem Containergehäuse (202) entfernt, beschädigt oder ausgetauscht ist.

9. Verschlusssystem nach Anspruch 7 oder 8, wobei das Bereitstellen, in Reaktion auf Empfangen des ersten Sensorsignals unter Verwendung der ersten Art von Kommunikationsschnittstelle (246), der ersten Benachrichtigung an die entsprechende erste Art von Kommunikationsschnittstelle (220), dass das Verschlussgehäuse (236) das Manipulationsereignis erfahren hat, Bereitstellen der ersten Benachrichtigung an ein Containermodul (208) umfasst, das in dem Containervolumen (204) angeordnet ist, die das Containermodul (208) veranlasst, unter Verwendung einer zweiten Art von Kommunikationsschnittstelle (218) und über ein Weitverkehrsnetzwerk, die erste Benachrichtigung einer Netzwerkdienstplattform (108) bereitzustellen.

10. Verschlusssystem nach Anspruch 9, wobei das Containermodul (208) die erste Benachrichtigung in einer lokalen Datenbank speichert bis das Weitverkehrsnetzwerk verfügbar ist.

11. Verschlusssystem nach einem der Ansprüche 7 bis 10, wobei das Verschlussgehäuse (236) weiter einen visuellen Indikator (262) umfasst, der an der Außenseite des Verschlussgehäuses (236) positioniert ist, und wobei die erste Sicherheitsengine (242) ausgelegt ist, den visuellen Indikator (262) zu veranlassen, eine erste visuelle Anzeige bereitzustellen, wenn das Verschlussgehäuse (236) das Manipulationsereignis erfahren hat.

12. Containerverschlusssicherheitsverfahren, umfassend:
Erfassen, durch ein Verschlusssystem über einen ersten Sensor, eines ersten Sensorsignals, das anzeigt, dass mindestens einen Abschnitt eines Verschlusssystem, das an einen Container gekoppelt ist, sodass das Verschlusssystem die Bewegung eines Materials zwischen einem Containervolumen (204), das durch den Container definiert ist, und einer Außenseite des Container über eine erste Öffnung (206b), die durch den Container definiert ist, verhindert, ein Manipulationsereignis erfahren hat; und
Bereitstellen, in Reaktion auf Empfangen des ersten Sensorsignals durch das Verschlusssystem, einer ersten Benachrichtigung über eine erste Art von Kommunikationsschnittstelle (246) an eine entsprechende erste Art von Kommunikationsschnittstelle (220), dass das Verschlusssystem das Manipulationsereignis erfahren hat,
**dadurch gekennzeichnet, dass** das Verschlusssystem ein RFID-Tag, das verschlüsselte Informationen speichert, die eine verschlüsselte Kennung beinhalten, und einen Sicherheitssensor, der ein RFID-Tag-Lesegerät beinhaltet, umfasst,
wobei das Verfahren weiter durch den folgenden Schritt gekennzeichnet ist:
Lesen mit dem RFID-Lesegerät des RFID-Tag und Aussenden der verschlüsselten Informationen, die im RFID-Tag beinhaltet sind, an eine Standardkommunikationsschnittstelle, die im Verschlusssystem und/oder im Container untergebracht ist.

13. Verfahren nach Anspruch 12, weiter umfassend:
Erzeugen, durch den Verschlusssensor, der in dem Verschlusssystem beinhaltet ist, des ersten Sensorsignals, das das Manipulationsereignis anzeigt, wenn der Verschlussabschnitt mindestens eines von aus der ersten Öffnung (206b) entfernt oder beschädigt ist.

14. Verfahren nach Anspruch 13, weiter umfassend:
Erzeugen, durch einen Dichtungs- (256b) Sensor, der in dem Verschlusssystem beinhaltet ist, eines zweiten Sensorsignals, das das Manipulationsereignis anzeigt, wenn eine Dichtung (256b), die auf dem Verschlusssystem beinhaltet ist, mindestens eines von aus dem Container entfernt, beschädigt oder ausgetauscht ist.

15. Verfahren nach einem der Ansprüche 12 bis 14, weiter umfassend:
Erzeugen, durch einen Dichtungssensor, der in dem Verschlusssystem beinhaltet ist, des ersten Sensorsignals, das das Manipulationsereignis anzeigt, wenn eine Dichtung (256b), die auf dem Verschlusssystem beinhaltet ist, mindestens eines von aus dem Container entfernt, beschädigt oder ausgetauscht ist, und/oder
wobei das Bereitstellen, in Reaktion auf Empfangen des ersten Sensorsignals unter Verwendung der ersten Art von Kommunikationsschnittstelle (246), der ersten Benachrichtigung an die entsprechende erste Art von Kommunikationsschnittstelle (220), dass das Verschlusssystem das Manipulationsereignis erfahren hat, Bereitstellen der ersten Benachrichtigung an ein Containermodul (208) beinhaltet, das in dem Containervolumen (204) angeordnet ist, und das Containermodul (208) veranlasst, unter Verwendung einer zweiten Art von Kommunikationsschnittstelle (218) und über ein Weitverkehrsnetzwerk, die erste Benachrichtigung einer Netzwerkdienstplattform (108) bereitzustellen, und/oder
Aktivieren, durch das Verschlusssystem, eines visuellen Indikators (262), um eine erste visuelle Anzeige bereitzustellen, wenn das Verschlusssystem das Manipulationsereignis erfahren hat.

## Revendications

1. Système de conteneur (102, 200) comprenant :
un châssis de conteneur (202) définissant un volume de conteneur (204) et une première ouverture (206b) ; et
un sous-système de fermeture (234) couplé au châssis de conteneur (202), dans lequel le sous-système de fermeture (234) comprend :
un châssis de fermeture (236) qui est configuré, lorsqu'il est couplé au châssis de conteneur (202), pour empêcher un mouvement d'un matériau entre le volume de conteneur (204) et l'extérieur du châssis de conteneur (202) par le biais de la première ouverture (206b), ledit châssis de fermeture (236) comprenant une étiquette RFID qui stocke des informations cryptées incluant un identifiant crypté ;
un premier sous-système de capteur (250b) qui est couplé au châssis de fermeture (236) et qui est configuré pour générer un premier signal de capteur lorsque le châssis de fermeture (236) subit un événement d'effraction ;
une interface de communication de premier type (246) logée dans le châssis de fermeture (236) ;
un premier système de traitement (238) qui est logé dans le châssis de fermeture (236) et qui est couplé à l'interface de communication de premier type (246) et au premier sous-système de capteur (250a) ; et
un premier système de mémoire (240) qui est logé dans le châssis de fermeture (236) et qui inclut une instruction qui, lorsqu'elle est exécutée par le premier système de traitement (238), amène le premier système de traitement (238) à fournir un moteur de sécurité (242) qui est configuré :
pour recevoir un premier signal de capteur indiquant que le châssis de fermeture (236) a subi l'événement d'effraction ; et
pour fournir, à la suite de la réception du premier signal de capteur à l'aide de l'interface de communication de premier type (246), une première notification à une interface de communication de premier type correspondante (220) indiquant que le châssis de fermeture (236) a subi l'événement d'effraction,
**caractérisé en ce que**
ledit châssis de fermeture (236) et/ou le châssis de conteneur (202) inclut un capteur de sécurité qui inclut un lecteur RFID, le lecteur d'étiquette RFID étant configuré pour lire l'étiquette RFID et pour diffuser les informations cryptées incluses dans l'étiquette RFID à une interface de communication standard logée à l'intérieur du châssis de fermeture (236) et/ou du châssis de conteneur (202).

2. Système de conteneur (102, 200) selon la revendication 1, dans lequel le châssis de fermeture (236) inclut une partie de fermeture qui est insérée dans l'ouverture (206b) et dans lequel le premier sous-système de capteur (250b) est configuré pour générer le premier signal de capteur indiquant l'événement d'effraction lorsque la partie de fermeture est au moins l'une d'être retirée de la première ouverture (206b), d'être endommagée ou d'être remplacée.

3. Système de conteneur (102, 200) selon la revendication 1 ou 2, dans lequel le châssis de fermeture (236) inclut en outre un joint (256b) couplant ensemble le châssis de conteneur (202) et le châssis de fermeture (236) et un second sous-système de capteur (250a), dans lequel le second sous-système de capteur est configuré pour générer un second signal de capteur indiquant l'événement d'effraction lorsque le joint (256b) est au moins l'un d'être retiré du châssis de conteneur (202), d'être endommagé ou d'être remplacé et/ou
dans lequel le châssis de fermeture (236) inclut en outre un joint (256b) couplant ensemble le châssis de conteneur (202) et le châssis de fermeture (236), dans lequel le premier sous-système de capteur (250a) est configuré pour générer le premier signal de capteur indiquant l'événement d'effraction lorsque le joint (256b) est au moins l'un d'être retiré du châssis de conteneur (202), d'être endommagé ou d'être remplacé.

4. Système de conteneur (102, 200) selon l'une quelconque des revendications précédentes, comprenant en outre un module de conteneur (208) qui est disposé à l'intérieur du volume de conteneur (204), dans lequel le module de conteneur (208) inclut :
l'interface de communication de premier type correspondante (220) ;
une interface de communication de second type (218) ;
un second système de traitement (210) qui est couplé à l'interface de communication de premier type (220) et à l'interface de communication de second type (218) ; et
un second système de mémoire (212) qui inclut une instruction qui, lorsqu'elle est exécutée par le second système de traitement (210), amène le second système de traitement (210) à fournir un moteur de conteneur qui est configuré :
pour recevoir la première notification indiquant que le châssis de fermeture (236) a subi l'événement d'effraction ; et
pour fournir, à l'aide de l'interface de communication de second type (218) et par le biais d'un réseau étendu, la première notification à une plate-forme de service de réseau (108).

5. Système de conteneur (102, 200) selon la revendication 4, dans lequel le moteur de conteneur est configuré :
pour déterminer que le réseau étendu est indisponible ; et
pour stocker la première notification dans une base de données locale jusqu'à ce que le réseau étendu soit à nouveau disponible.

6. Système de conteneur (102, 200) selon l'une quelconque des revendications précédentes, dans lequel le sous-système de fermeture (234) comprend en outre un indicateur visuel (262) positionné à l'extérieur du châssis de fermeture (236) et dans lequel le moteur de sécurité (242) est configuré pour amener l'indicateur visuel (262) à fournir une première indication visuelle lorsque le châssis de fermeture (236) a subi l'événement d'effraction.

7. Système de fermeture comprenant:
un châssis de fermeture (236) qui est configuré, lorsqu'il est couplé à un châssis de conteneur (202), pour empêcher un mouvement d'un matériau entre un volume de conteneur (204) défini par le châssis de conteneur (202) et l'extérieur du châssis de conteneur (202) par le biais d'une première ouverture (206b) définie par le châssis de conteneur (202), ledit châssis de fermeture (236) comprenant une étiquette RFID qui stocke des informations cryptées incluant un identifiant crypté ;
un premier sous-système de capteur (250b) qui est couplé au châssis de fermeture (236) et qui est configuré pour générer un premier signal de capteur lorsque le châssis de fermeture (236) est déplacé par rapport à la première ouverture (206b) ;
une interface de communication de premier type (246) logée dans le châssis de fermeture (236) ;
un premier système de traitement (238) qui est logé dans le châssis de fermeture (236) et qui est couplé à l'interface de communication de premier type (246) et au premier sous-système de capteur (250b) ; et
un premier système de mémoire (240) qui est logé dans le châssis de fermeture (236) et qui inclut une instruction qui, lorsqu'elle est exécutée par le premier système de traitement (238), amène le premier système de traitement (238) à fournir un premier moteur de sécurité (242) qui est configuré :
pour recevoir un premier signal de capteur indiquant que le châssis de fermeture (236) a subi un événement d'effraction ; et
pour fournir, à la suite de la réception du premier signal de capteur à l'aide de l'interface de communication de premier type (246), une première notification à une interface de communication de premier type correspondante (220) indiquant que le châssis de fermeture (236) a subi l'événement d'effraction ;
**caractérisé en ce que**
ledit châssis de fermeture (236) inclut un capteur de sécurité qui inclut un lecteur d'étiquette RFID, le lecteur d'étiquette RFID étant configuré pour lire l'étiquette RFID et pour diffuser les informations cryptées incluses dans l'étiquette RFID à une interface de communication standard logée à l'intérieur du châssis de fermeture (236) et/ou du châssis de conteneur (202).

8. Système de fermeture selon la revendication 7, dans lequel le châssis de fermeture (236) inclut un joint qui est inséré dans la première ouverture (206b) et dans lequel le premier sous-système de capteur (250b) est configuré pour générer le premier signal de capteur indiquant l'événement d'effraction lorsque la partie de fermeture est au moins l'une d'être retirée de la première ouverture (206b), d'être endommagée ou d'être remplacée et/ou
dans lequel le châssis de fermeture (236) inclut en outre un joint (256b) couplant ensemble le châssis de conteneur (202) et le châssis de fermeture (236) et un second sous-système de capteur (250a), dans lequel le second sous-système de capteur (250a) est configuré pour générer un second signal de capteur indiquant l'événement d'effraction lorsque le joint (256b) est au moins l'un d'être retiré du châssis de conteneur (202), d'être endommagé ou d'être remplacé et/ou
dans lequel le châssis de fermeture (236) inclut en outre un joint (256b) couplant ensemble le châssis de conteneur (202) et le châssis de fermeture (236), dans lequel le premier sous-système de capteur (250b) est configuré pour générer le premier signal de capteur indiquant l'événement d'effraction lorsque le joint (256b) est au moins l'un d'être retiré du châssis de conteneur (202), d'être endommagé ou d'être remplacé.

9. Système de fermeture selon la revendication 7 ou 8, dans lequel la fourniture, à la suite de la réception du premier signal de capteur à l'aide de l'interface de communication de premier type (246), de la première notification à l'interface de communication de premier type correspondante (220) indiquant que le châssis de fermeture (236) a subi l'événement d'effraction inclut la fourniture de la première notification à un module de conteneur (208) qui est disposé à l'intérieur du volume de conteneur (204) qui amène le module de conteneur (208) à fournir, à l'aide d'une interface de communication de second type (218) et par le biais d'un réseau étendu, la première notification à une plate-forme de service de réseau (108).

10. Système de fermeture selon la revendication 9, dans lequel le module de conteneur (208) stocke la première notification dans une base de données locale jusqu'à ce que le réseau étendu soit disponible.

11. Système de fermeture selon l'une quelconque des revendications 7 à 10, dans lequel le châssis de fermeture (236) comprend en outre un indicateur visuel (262) positionné à l'extérieur du châssis de fermeture (236) et dans lequel le premier moteur de sécurité (242) est configuré pour amener l'indicateur visuel (262) à fournir une première indication visuelle lorsque le châssis de fermeture (236) a subi l'événement d'effraction.

12. Procédé de sécurité de fermeture de conteneur comprenant :
la capture, au moyen d'un système de fermeture, par le biais d'un premier capteur, d'un premier signal de capteur qui indique au moins une partie d'un système de fermeture couplé à un conteneur de telle sorte que le système de fermeture empêche un mouvement d'un matériau entre un volume de conteneur (204) défini par le conteneur et l'extérieur du conteneur par le biais d'une première ouverture (206b) définie par le conteneur, a subi l'événement d'effraction ; et
la fourniture, à la suite de la réception du premier signal de capteur par le système de fermeture, d'une première notification par le biais d'une interface de communication de premier type (246) à une interface de communication de premier type correspondante (220) indiquant que le système de fermeture a subi l'événement d'effraction,
**caractérisé en ce que** ledit système de fermeture comprend une étiquette RFID qui stocke des informations cryptées incluant un identifiant crypté et un capteur de sécurité qui inclut un lecteur d'étiquette RFID,
ledit procédé étant en outre **caractérisé par** l'étape suivante consistant :
au moyen du lecteur RFID, à lire l'étiquette RFID et à diffuser les informations cryptées incluses dans l'étiquette RFID à une interface de communication standard logée à l'intérieur du système de fermeture et/ou du conteneur.

13. Procédé selon la revendication 12, comprenant en outre :
la génération, par le capteur de fermeture inclus dans le système de fermeture, du premier signal de capteur indiquant que l'événement d'effraction lorsque la partie de fermeture est au moins d'être retirée de la première ouverture (206b) ou d'être endommagée.

14. Procédé selon la revendication 13, comprenant en outre :
la génération, par un capteur de joint (256b) inclus dans le système de fermeture, d'un second signal de capteur indiquant l'événement d'effraction lorsqu'un joint (256b) inclus sur le système de fermeture est au moins l'un d'être retiré du conteneur, d'être endommagé ou d'être remplacé.

15. Procédé selon l'une quelconque des revendications 12 à 14, comprenant en outre :
la génération, par un capteur de joint inclus dans le système de fermeture, du premier signal de capteur indiquant l'événement d'effraction lorsqu'un joint (256b) inclus sur le système de fermeture est au moins l'un d'être retiré du conteneur, d'être endommagé ou d'être remplacé et/ou
dans lequel la fourniture, à la suite de la réception du premier signal de capteur à l'aide de l'interface de communication de premier type (246), de la première notification à l'interface de communication de premier type correspondante (220) indiquant que le système de fermeture a subi l'événement d'effraction inclut la fourniture de la première notification à un module de conteneur (208) qui est disposé à l'intérieur du volume de conteneur (204) et qui amène le module de conteneur (208) à fournir, à l'aide d'une interface de communication de second type (218) et par le biais d'un réseau étendu, la première notification à une plate-forme de service de réseau (108) et/ou
l'activation, par le système de fermeture, d'un indicateur visuel (262) pour fournir une première indication visuelle lorsque le système de fermeture a subi l'événement d'effraction.
